# EUROPEAN PATENT SPECIFICATION

(11) **EP 1 449 702 B1**
(45) Date of publication and mention of the grant of the patent: **04.06.2008**
(21) Application number: 04001312.0
(22) Date of filing: 22.01.2004
(51) Int. Cl.: B60K 15/05

(54) **Fuel filling system**
System zum Einfüllen von Kraftstoff
Système d'entrée de combustible

(30) Priority: 24.01.2003 US 442795 P
(43) Date of publication of application: 25.08.2004
(73) Proprietor: Ford Global Technologies, LLC, Dearborn, MI 48126 (US)
(72) Inventor: Andersson, Ann-Charlotte, 41703 Göteborg (SE); Johansson-Kask, Karolina, 41726 Göteborg (SE)
(74) Representative: Mossmark, Anders Lennart

(56) References cited:
- EP-A- 0 608 257
- EP-A- 1 090 796
- DE-A1- 4 425 838
- DE-A1- 4 440 814
- DE-A1- 19 935 454
- US-A- 5 066 062
- US-B1- 6 231 107

## Description

### TECHNICAL FIELD

The invention relates to a fuel filling system for a vehicle, comprising a movable filler hatch covering a fuel filling opening allowing access to at least one fuel filling pipe. The invention further relates to a method for operating said filler hatch.

### BACKGROUND ART

Current vehicles are provided with a fuel filling arrangement including a fuel filling hatch and a fuel cap attached to a fuel filler pipe. To gain access to the fuel filler pipe, a user must manually open the fuel filling hatch, either by hand or by releasing a spring loaded catch from the passenger compartment. Then the fuel cap must be manually unscrewed in order to allow insertion of a fuel filling nozzle.

This procedure can be unpleasant to the user due to the accumulation of dirt on said hatch and the surrounding surfaces of the vehicle, especially during wet and wintry conditions. The protruding hatch may also be accidentally damaged or its hinges bent if it is not opened correctly or if the user forgets to close the hatch after refuelling. A further problem is the risk of loosing the filler cap, as many vehicles have no provision for attaching the cap to the vehicle during refuelling, which may result in the cap being left behind at the filling station. Also, as most car manufacturers have a wide range of models it is difficult to provide new type of services, such as automated filling stations. Such stations would require vehicles to be provided with standardised, easily accessible filler openings and filler caps.

A known fuel filling arrangement is shown in EP 0 608 527, which discloses the preamble of claims 1 and 7, wherein a combined closure and hatch is first tilted out of the vehicle an then displaced away from the filler opening. A problem with this arrangement is that the hatch must be relatively large, as a pair of carriers supporting the hatch must be maintained within the opening uncovered by the hatch Hence there will be a conflict between a desire to keep the hatch relatively small, and the requirement to provide a size of opening allowing the hatch to be displaced a sufficient distance to uncover the entire opening. When in its opened position, the hatch will also be arranged at an angle that makes it protrude from the side of the vehicle.

Hence there exists a need for an improved fuel filling system, where the user can refuel the vehicle with a minimum of contact with the area surrounding the filler opening. There is also a need for filler hatches that can be opened and/or closed automatically, which take up a minimum of space, and which do not protrude from the vehicle to a greater extent.

### DISCLOSURE OF INVENTION

The above problems have been solved by a fuel filling arrangement and a method for operating a fuel filler hatch according to claims 1 and 7, and their dependent claims.

The invention relates to a fuel filling system for a vehicle, comprising a movable hatch covering a fuel filling opening allowing access to at least one fuel filling pipe, each fuel filling pipe connected to a respective fuel tank, and where the hatch has an outer, main surface placed substantially in the same plane as a surrounding surface of the vehicle body when in its closed position.

The hatch is arranged to be moved from its closed position in a first direction substantially perpendicular to the plane of its main surface, and subsequently in a second direction substantially parallel to the plane of said surface of the vehicle, to an open position, where at least one filling opening is uncovered.

When the fuel filling system may be actuated by remote control, such as a button inside the passenger compartment or other suitable means. The fuel filler hatch, which is normally flush with the outer surface of the vehicle, may then be moved inwards or outwards, away from the plane of the adjoining surface surrounding said hatch. Once the hatch is clear of the adjoining surface, it may be displaced substantially parallel to the plane of said outer surface to reveal the fuel filler pipe. This movement may be a sliding displacement in a vertical direction, up or down, or in a horizontal direction, sideways with respect to the opening covered by the filler hatch. However a rotary movement around an axis substantially perpendicular to the plane of the hatch is also possible.

The fuel filler cap has been replaced by a valve arrangement, using a valve of the non-return type, for instance a so-called "Clack Valve", in order to allow cap less refuelling. The opening may also contain more that one filler valve. This can be the case for bi-fuel vehicles which can be driven on both gas, such as liquid petrol gas (LPG) or compressed natural gas (CNG) and a liquid fuel, such as petrol and/or methanol. For LPG or CNG, standard filler valves adapted for this purpose are used.

After refuelling, a small amount of pressure on the side of the hatch will cause it to reverse the movements described above, to close and lock automatically. This is a semi-automatic refuelling system, which can be adapted to become fully automatic for co-operation with an automatic fuel pump at an automated filling station. Closing of the hatch may of course also be done by remote control, as indicated above.

The purpose of the invention is to make refuelling easier, to enable interaction with an automatic fuel pump and give the fuel filling area a more aesthetic look.

There are several advantages with this concept. It facilitates refuelling, as the driver does not need to manually open the hatch and unscrew the cap. By removing the cap altogether, loosing the cap will no longer be a problem. When the hatch is open it does not protrude from the vehicle, as it is positioned along the outer or inner surface thereof. This will minimise the risk that the hatch will be bent or damaged accidentally, and will also prevent items of the drivers clothing to catch on the extended section of said hatch. The initial movement of the hatch is substantially perpendicular to the side of the vehicle body, which allows the clearance gap between the vehicle body and the hatch to be minimised. Because the hatch opens automatically it can be made substantially flat and with relatively small tolerances around its side edges, as no thumb grip or similar is needed for opening. Also, because the cap bas been replaced by a valve arrangement, mainly in order to stop vapour leakage and/or to allow for co-operation with a standardised filling nozzle, the hatch can be considerably reduced in size, as compared to currently used hatches. By allowing the hatch to follow the outer contour of the vehicle body may also give a discrete and aesthetic impression.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a filler hatch according to the invention in an open position;
- Figure 2: Figure 2 shows a casing as described in Figure 1;
- Figure 3: shows a cross-section of the rubber moulding;
- Figure 4: shows the hatch in its open and closed position;
- Figure 5: shows the hatch in its closed position;
- Figure 6: shows a perspective view of the filling unit according to the invention.

When you want to close it you just have to push lightly on the side and the electric motor will drive the hatch back and pull it into, the closed position.

### MODES FOR CARRYING OUT THE INVENTION

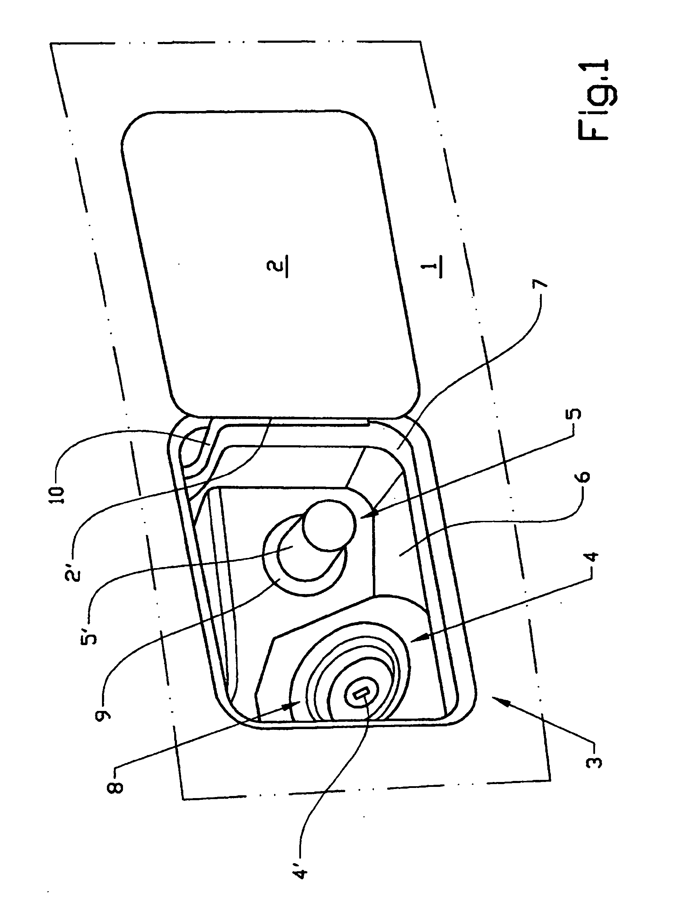

Figure 1 shows a schematic illustration of an outer surface 1, such as the sheet metal skin, of a vehicle body provided with a filler unit. A filler hatch 2 is shown in its open position, in which a filler opening 3 is uncovered. In this embodiment the filler opening 3 is provided with two filler openings 4, 5 for a liquid fuel and a gas fuel respectively. The filler pipes 4, 5 are attached to a cover and are each connected to individual fuel tanks (not shown) adapted to the particular fuels. The filler pipe for liquid fuel 4 is provided with a non-return valve 4', while the filler pipe 5 for gas is provided with a gas nipple 5'.

If only one filler opening is required, the cover shown may be replaced by a cover having a single filler pipe of the desired type. Alternatively the filler pipe not required could be plugged or otherwise sealed, so that a single cover may be used for several vehicle models.

The cover may be attached directly to the outer surface 1 of the vehicle, but in the embodiment shown an intermediate seal or moulding 7 is attached between the casing 6 and the vehicle 1. The cover 6 can be made from ABS plastic with some rubber components, such as seals and spacers. The plastic cover is provided for several reasons, such as to prevent ingress of dirt from, for instance a wheel housing. Also, if a collision occurs, the plastic cover 7 will not damage the filler pipes 4, 5 which could possibly happen if the cover was made from sheet metal. The rubber components comprise two spacers 8, 9 that seal against the gas nipple 5 and petrol pipe 4. This is to give some flexibility, to absorb vibrations and to aid assembly of the filler unit.

The hatch 2 is attached to a carrier 10 along one of is side edges 2'. The carrier is slideable in a guide that controls the movement of the hatch 2 when a motor attached to the carrier is actuated. In this example an electric motor will be described, but pneumatic and hydraulic motors may also be used.

The hatch, electric motor and the other components listed above will be preassembled to the plastic cover, which can then be assembled as a filler unit. The rubber moulding is used to attach the filler unit to the car body and to provide a seal around the fuel. filling opening and to seal the hatch to the body when closed.

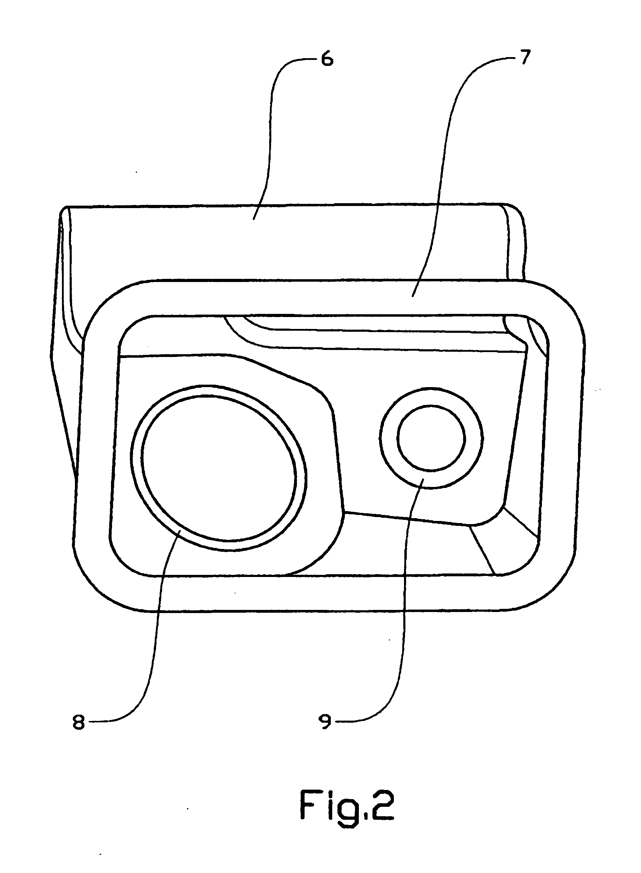

Figure 2 shows a casing as described in Figure 1, provided with the rubber moulding and rubber seals 8, 9.

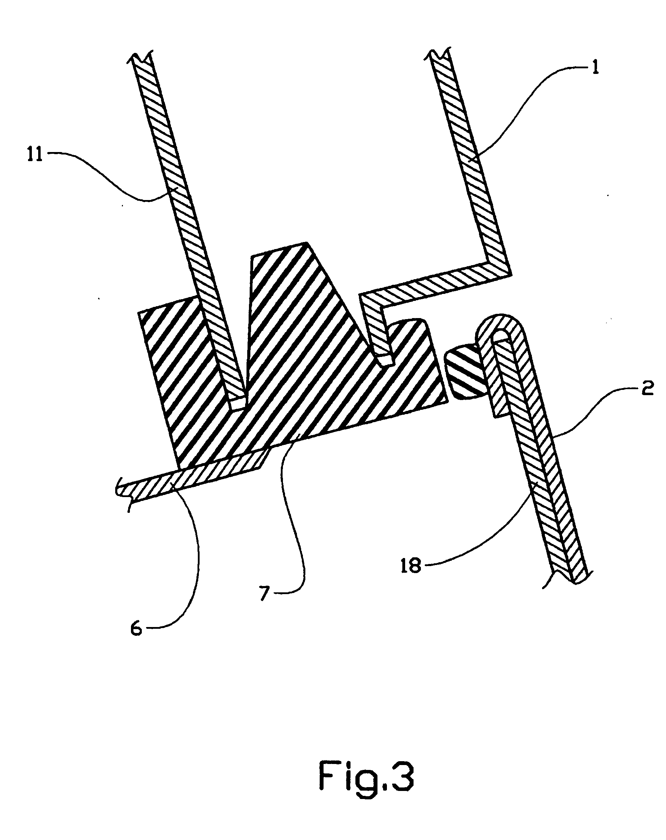

Figure 3 shows a cross-section of the rubber moulding 7 fitted to the outer and an inner surface 1, 11 of the vehicle, where it can seal against ingress of dirt, etc. The figure also shows how the hatch 2 can be provided with an additional rubber seal 12 to ensure a sealed contact between hatch 2 and rubber mould 7.

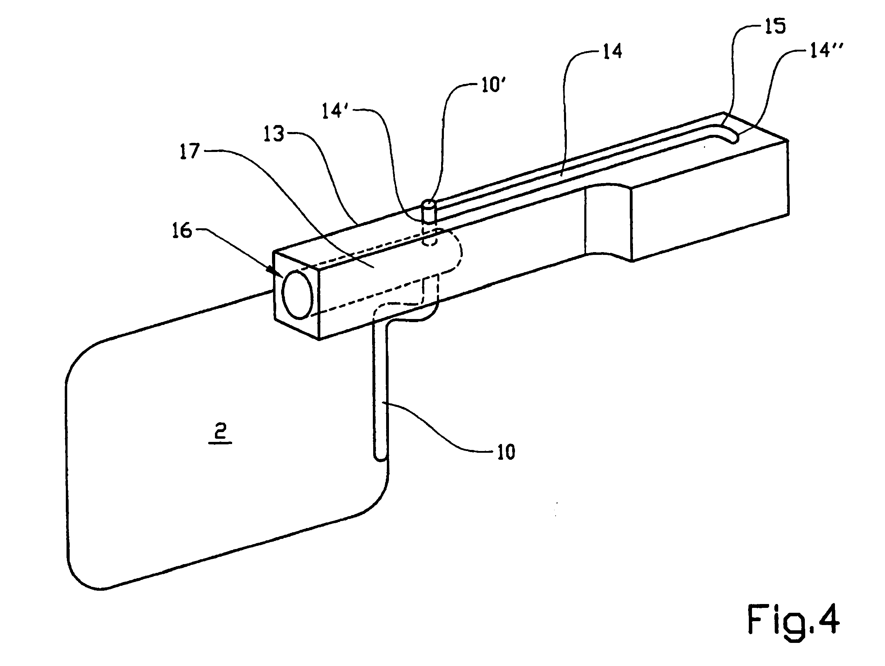

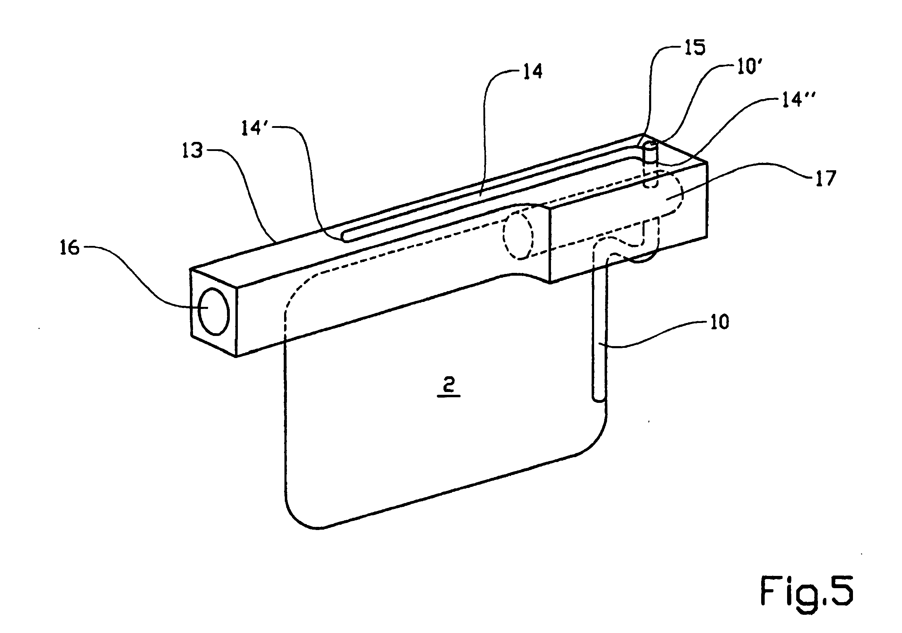

Figures 4 and 5 shows the hatch 2 in its open and closed positions respectively. The figures show how the carrier 10 is slidable in a guide 13 controlling the movement of the hatch 2. The guide can slide in a slot 14 in the guide 13. In Figure 4 the guide 13 is placed in a first end position 14'. In Figure 5 the electric motor (not shown) has displaced the carrier 10 along the slot 14 towards and into a second end position 14". The slot 14 is provided with a curved section 15 near the second end position 14". This causes the carrier to be displaced inwards, thus moving the hatch 2 inwards into contact with the rubber mould (see Fig. 1) to close and seal the filler opening 3.

The guide is further provided with a cylindrical hole 16 in parallel with the main direction of the slot 14, in which hole a cylindrical body 17 is slideable. The carrier 10 runs through and is fixed to the cylindrical body 17, which provides stability to the carrier 10 in the longitudinal direction of the slot 14. Consequently, when the carrier 10 approaches the second end position 14" space is provided within the guide to allow the cylindrical body to move sideways relative to the axis of the hole 16.

The same guide may be used for the embodiment where the hatch is displaced into the vehicle. In this case the hatch would first be displaced inwards at right angles to the outer surface of the vehicle. This would entail using a guide where the second end position of the slot is placed in the opposite direction to the embodiments of Figure 4 and 5, that is directed towards the outer surface of the vehicle.

The carrier that is attached to the hatch is, at the outer end 10', attached to a cylinder, which in turn attaches to a drive unit in the form of an electric motor. As described above, the cylinder runs inside a hole, which gives horizontal stability, The bar goes through the cylinder and runs in a 5 mm wide slot both above and below the cylinder to provide vertical. stability. The cylinder is driven with help of a trapezoidal screw rotated by the motor.

Other mechanisms and actuators are of course possible. According to an alternative embodiment, the guide itself may be moved outwards or inwards to release the hatch, whereafter the hatch may be displaced in a desired direction.

The operation of the arrangement is as follows. When you push a button inside the passenger compartment an electric motor that operates the hatch will start. At first the whole carrier will be driven outwards, say approximately 10 mm, by means of the guide. Then the motor will drive the hatch to one side of the opening to uncover the filling valves. Almost the whole fuel filling opening will then be uncovered. When the hatch reaches its open position it will actuate a first micro-switch that will stop the electric motor. When closing the hatch the motor will be reversed and drive the hatch in the opposite direction. The hatch will then return to its closed position and lock automatically. When the hatch has reached its closed position, a second micro-switch is actuated to stop the electric motor.

In the current example, the hatch is made from pressed steel and has a thickness of 0.8 mm. The external dimensions of the hatch are 160 x 100 mm with a corner radius of 18 mm. On the inner side of the hatch there is a 1 mm thick steel frame reinforcement 18 (see Fig. 3). Measured from the outer edge of the hatch the frame will be 15 mm wide, except at the side where the bar is be attached where it will be 30 mm wide. The frame will be hemmed to the hatch, by folding the edge of the hatch over the edge of the frame. The hatch will hemmed, to the frame using a 4 mm hem The total thickness at the outer edge of the hatch will be about 2.6 mm.

However, for the purpose of weight saving the hatch may also be made from alternative materials such as aluminium or a plastic material.

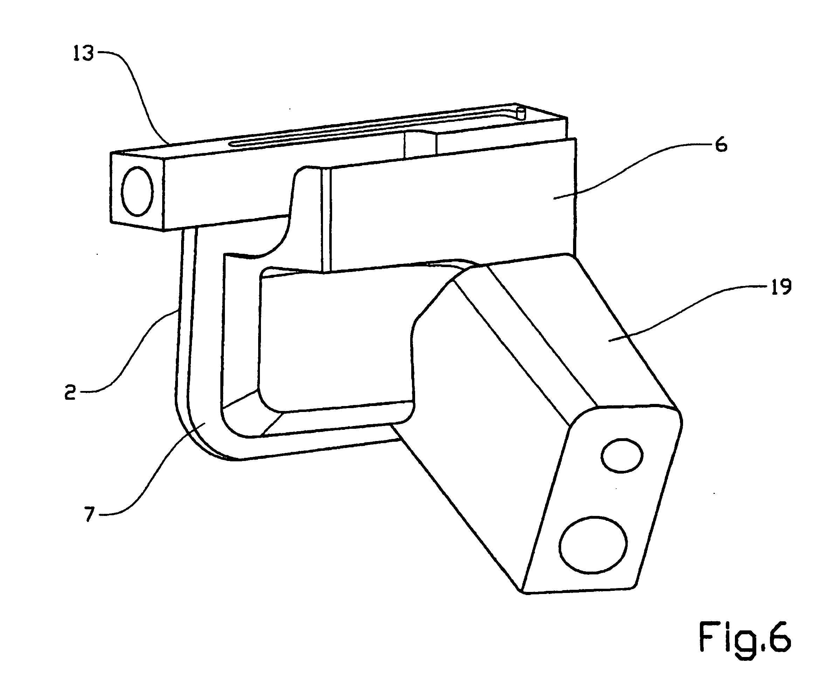

Figure 6 shows a rear view of the assembled filler unit, including the cover 6, the rubber moulding 7, the hatch 2 and a connector 19 for the filler pipes.

The invention is not limited to the above embodiments, but may be modified within the scope of the appended claims.

## Claims

1. Fuel filling system for a vehicle, comprising a movable hatch (2) covering a fuel filling opening (3) allowing access to at least one fuel filling pipe, each fuel filling pipe (4, 5) connected to a respective fuel tank, and where the hatch (2) has an outer, main surface placed in the same plane as a surrounding surface of the vehicle body when in its closed position, wherein the hatch (2) is arranged to be displaced from its closed position in a first direction perpendicular to the plane of its main surface in a direction out of the vehicle, and subsequently in a second direction horizontally and parallel to the plane of said surface of the vehicle, to an open position, where at least one filling opening (3) is uncovered, **characterized in that** the hatch is kept parallel to the surrounding surface of the vehicle body (1) during the opening and the closing process, and wherein the hatch (2) is attached to a carrier which is provided with a guide (13) for controlling the opening and the closing of said hatch (2).

2. Fuel filling system according to claim 1, **characterized in that** the hatch (2) is attached to a carrier driven by a motor to open and close the hatch.

3. Fuel filling system according to claim 1, **characterized in that** the motor is arranged to be actuated by remote control for opening and/or closing the hatch (2).

4. Fuel filling system according to claim 1, **characterized in that** the guide (13) is arranged to control said first and second displacements.

5. Fuel filling system according to claim 1, **characterized in that** each fuel filling pipe (4, 5) is provided with a closure valve, (11)

6. Fuel filling system according to claim 5, **characterized in that** the closure valve is a non-return valve.

7. Method for operating a movable hatch (2) covering a fuel filling opening (3) allowing access to at least one fuel filling pipe (4, 5) of a vehicle, where each fuel filling pipe (4, 5) is connected to a respective fuel tank, and where the hatch (2) has an outer, main surface placed in the same plane as a surrounding surface of the vehicle body when in its closed position, wherein the hatch (2) is opened by displacing it from its closed position in a first direction perpendicular to the plane of its main surface in a direction out of the vehicle, and subsequently in a second direction horizontally and parallel to the plane of said surface of the vehicle, to an open position, where at least one filling opening (3) is uncovered, **characterized by** maintaining the hatch parallel to the surrounding surface of the vehicle body (1) during the opening and the closing process, and displacing the hatch together with a carrier to which it is attached, which carrier is provided with a guide for controlling the opening and the closing of said hatch.

## Patentansprüche

1. Kraftstoffeinfüllsystem für ein Fahrzeug mit einer beweglichen Klappe (2), die eine Kraftstoffeinfüllöffnung (3) abdeckt, die einen Zugang zu wenigstens einem Kraftstoffeinfüllrohr ermöglicht, wobei jedes Kraftstoffeinfüllrohr (4, 5) mit einem entsprechenden Kraftstofftank verbunden ist, und wobei die Klappe (2) eine äußere Hauptoberfläche besitzt, die in derselben Ebene wie eine umgebende Oberfläche der Fahrzeugkarosserie angeordnet ist, wenn sie sich in ihrer geschlossenen Position befindet, wobei die Klappe (2) für eine Schwenkung aus ihrer geschlossenen Position in eine erste Richtung senkrecht zu der Ebene der Hauptoberfläche in einer Richtung aus dem Fahrzeug heraus und anschließend in eine zweite Richtung horizontal und parallel zu der Ebene der Oberfläche des Fahrzeugs in eine offene Position eingerichtet ist, in welcher wenigstens eine Einfüllöffnung (3) nicht verdeckt ist, **dadurch gekennzeichnet, dass** die Klappe parallel zu der umgebenden Oberfläche der Fahrzeugkarosserie (1) während des Öffnungs- und Schließvorgangs gehalten wird, und wobei die Klappe (2) an einem Träger angeordnet ist, welcher mit einer Führung (13) für die Steuerung des Öffnungs- und Schließvorgangs der Klappe (2) versehen ist.

2. Kraftstoffeinfüllsystem nach Anspruch 1, **dadurch gekennzeichnet, dass** die Klappe (2) an einem Träger angebracht ist, der von einem Motor zum Öffnen und Schließen der Klappe angetrieben wird.

3. Kraftstoffeinfüllsystem nach Anspruch 1, **dadurch gekennzeichnet, dass** der Motor zur Betätigung durch eine Fernsteuerung zum Öffnen und/oder Schließen der Klappe (22) eingerichtet ist.

4. Kraftstoffeinfüllsystem nach Anspruch 1, **dadurch gekennzeichnet, dass** die Führung (13) zur Steuerung der ersten und zweiten Schwenkvorgänge eingerichtet ist.

5. Kraftstoffeinfüllsystem nach Anspruch 1, **dadurch gekennzeichnet, dass** jedes Kraftstoffeinfüllrohr (4, 5) mit einem Schließventil (11) versehen ist.

6. Kraftstoffeinfüllsystem nach Anspruch 5, **dadurch gekennzeichnet, dass** das Ventil ein Ventil mit Rückströmsperre ist.

7. Verfahren zum Betätigen einer beweglichen Klappe (2), die eine Kraftstofteinfüllöttnung (3) abdeckt, um einen Zugang zu wenigstens einem Kraftstoffeinfüllrohr (4, 5) eines Fahrzeugs zu ermöglichen, wobei jedes Kraftstoffeinfüllrohr (4, 5) mit einem entsprechenden Kraftstofftank verbunden ist und wobei die Klappe (2) eine äußere Hauptoberfläche besitzt, die in derselben Ebene wie eine umgebende Oberfläche der Fahrzeugkarosserie angeordnet ist, wenn sie sich in ihrer geschlossenen Position befindet, wobei die Klappe (2) geöffnet wird, indem sie aus ihrer geschlossenen Position in eine erste Richtung senkrecht zu der Ebene der Hauptoberfläche in einer Richtung aus dem Fahrzeug heraus und anschließend in eine zweite Richtung horizontal und parallel zu der Ebene der Oberfläche des Fahrzeugs in eine offene Position geschwenkt wird, in welcher wenigstens eine Einfüllöffnung (3) nicht verdeckt ist, **dadurch gekennzeichnet, dass** die Klappe parallel zu der umgebenden Oberfläche der Fahrzeugkarosserie (1) während des Öffnungs- und Schließvorgangs gehalten wird, und die Klappe zusammen mit einem Träger, an dem sie angeordnet ist, geschwenkt wird, welcher mit einer Führung zur Steuerung des Öffnungs- und Schließvorgangs der Klappe versehen ist.

## Revendications

1. Système de remplissage de carburant pour un véhicule, comportant une trappe mobile (2) recouvrant une ouverture de remplissage de carburant (3) permettant d'accéder à au moins une conduite de remplissage de carburant, chaque conduite de remplissage de carburant (4, 5) étant reliée à un réservoir de carburant respectif, et où la trappe (2) a une surface principale extérieure placée dans le même plan qu'une surface périphérique de la carrosserie de véhicule lorsqu'elle est dans sa position fermée, dans lequel la trappe (2) est conçue pour être déplacée depuis sa position fermée dans une première direction perpendiculaire au plan de sa surface principale dans une direction vers l'extérieur du véhicule, et ultérieurement dans une seconde direction horizontalement et parallèlement au plan de ladite surface du véhicule, jusqu'à une position ouverte, où au moins une ouverture de remplissage (3) est découverte, **caractérisé en ce que** la trappe est maintenue parallèle à la surface périphérique de la carrosserie de véhicule (1) pendant les processus d'ouverture et de fermeture, et dans lequel la trappe (2) est fixée sur un support qui est muni d'un guide (13) pour commander l'ouverture et la fermeture de ladite trappe (2).

2. Système de remplissage de carburant selon la revendication 1, **caractérisé en ce que** la trappe (2) est fixée sur un support entraîné par un moteur pour ouvrir et fermer la trappe.

3. Système de remplissage de carburant selon la revendication 1, **caractérisé en ce que** le moteur est conçu pour être actionné par une commande à distance pour ouvrir et/ou fermer la trappe (2).

4. Système de remplissage de carburant selon la revendication 1, **caractérisé en ce que** le guide (13) est conçu pour commander lesdits premier et second déplacements.

5. Système de remplissage de carburant selon la revendication 1, **caractérisé en ce que** chaque conduite de remplissage de carburant (4, 5) est munie d'une soupape de fermeture (11).

6. Système de remplissage de carburant selon la revendication 5, **caractérisé en ce que** la soupape de fermeture est un clapet antiretour.

7. Procédé pour actionner une trappe mobile (2) recouvrant une ouverture de remplissage de carburant (3) permettant d'accéder à au moins une conduite de remplissage de carburant (4, 5) d'un véhicule, où chaque conduite de remplissage de carburant (4, 5) est reliée à un réservoir de carburant respectif, et où la trappe (2) a une surface principale extérieure placée dans le même plan qu'une surface périphérique de la carrosserie de véhicule lorsqu'elle est dans sa position fermée, dans lequel la trappe (2) est ouverte en la déplaçant depuis sa position fermée dans une première direction perpendiculaire au plan de sa surface principale dans une direction vers l'extérieur du véhicule, et ultérieurement dans une seconde direction horizontalement et parallèlement au plan de ladite surface du véhicule, jusqu'à une position ouverte, où au moins une ouverture de remplissage (3) est découverte, **caractérisé par** le fait de maintenir la trappe parallèle à la surface périphérique de la carrosserie de véhicule (1) pendant les processus d'ouverture et de fermeture, et de déplacer la trappe en association avec un support sur lequel elle est fixée, lequel support est muni d'un guide pour commander l'ouverture et la fermeture de ladite trappe.
